# EUROPÄISCHE PATENTSCHRIFT

(11) **EP 3 692 611 B1**
(45) Veröffentlichungstag und Bekanntmachung des Hinweises auf die Patenterteilung: **27.10.2021**
(21) Anmeldenummer: 18833826.3
(22) Anmeldetag: 20.12.2018
(51) Int. Cl.: H02B 1/30

(54) **ANORDNUNG ZUR POSITIONIERUNG EINES FLACHTEILS AN EINEM SCHALTSCHRANKRAHMENGESTELL SOWIE EIN ENTSPRECHENDES VERFAHREN**
ARRANGEMENT FOR POSITIONING A FLAT PART ON AN ELECTRICAL CABINET FRAME AND RELATED METHOD
DISPOSITIF DE POSITIONNEMENT D'UNE PIECE PLAT SUR UN CHÂSSIS D'ARMOIRE ÉLECTRIQUE ET PROCÉDÉ CORRESPONDANT

(30) Priorität: 05.02.2018 DE 102018102488
(43) Veröffentlichungstag der Anmeldung: 12.08.2020
(73) Patentinhaber: Rittal GmbH & Co. KG, 35745 Herborn (DE)
(72) Erfinder: REUTER, Wolfgang, 56479 Liebenscheid (DE); SCHINDLER, Timo, 35075 Gladenbach (DE)
(74) Vertreter: Angerhausen, Christoph
(86) Internationale Anmeldenummer: PCT/DE2018/101035
(87) Internationale Veröffentlichungsnummer: WO 2019/149301

(56) Entgegenhaltungen:
- EP-A1- 1 164 672
- DE-A1-102015 121 192
- US-A1- 2016 352 080

## Beschreibung

Die Erfindung geht aus von einer Anordnung zur Positionierung eines Flachteils an einem Schaltschrankrahmengestell, mit einem Schaltschrankrahmengestell, das einen zur Außenseite des Schaltschrankrahmengestells abstehenden, horizontalen Profilsteg aufweist, und mit einem Flachteil, das an seinem Außenumfang zumindest abschnittsweise eine L-Umkantung aufweist, sowie mit einem Positionierstück, das auf den Profilsteg aufgesetzt ist. Eine derartige Anordnung ist aus der US 2016/352080 A1 bekannt. Ähnliche Anordnungen beschreiben auch die EP 1164 672 A1, die DE 10 2015 121192 A1, die DE 10 2015 121192 A1, die DE 10 2014 101404 B4 und die DE 10 2015 121193 B4.

Die aus dem Stand der Technik bekannten Anordnungen haben den Nachteil, dass die mit Hilfe des Positionierstücks erreichte Vorpositionierung des Flachteils am Schaltschrankrahmengestell, um dieses in einem weiteren Schritt mit Befestigungsmitteln wie Schrauben und dergleichen an dem Schaltschrankrahmengestell festzulegen, nur eine unzureichende Ausrichtung des Flachteils gegenüber dem Schaltschrankrahmengestell gewährleisten kann. Häufig ist es nach dem Auflegen des Flachteils über das Positionierstück auf das Schaltschrankrahmengestell immer noch nötig, durch manuelle Nachjustage das Flachteil gegenüber dem Schaltschrankrahmengestell zu verrücken, bis etwa für die Verschraubung des Flachteils an dem Schaltschrankrahmengestell vorgesehene Schraubdurchlässe und Gewindeaufnahmen exakt miteinander fluchten.

Es ist daher die Aufgabe der Erfindung, eine Anordnung der eingangs beschriebenen Art derart weiterzuentwickeln, dass sie die komfortable und präzise Vorpositionierung eines Flachteils an einem Schaltschrankrahmengestell erlaubt.

Diese Aufgabe wird durch eine Anordnung mit den Merkmalen des Anspruchs 1 gelöst. Ein entsprechendes Verfahren ist Gegenstand des Anspruchs 13. Die abhängigen Ansprüche betreffen jeweils vorteilhafte Ausführungsformen der Erfindung.

Demgemäß ist bei einer Anordnung zur Positionierung eines Flachteils an einem Schaltschrankrahmengestell vorgesehen, dass das Positionierstück einen Formschlussabschnitt mit drei senkrecht zueinander verlaufenden Anlageflächen aufweist, mit denen der Formschlussabschnitt in einer Ecke des Flachteils an jeweils einer von drei senkrecht zueinander verlaufenden Innenseiten der L-Umkantung formschlüssig anliegt.

Die Erfindung macht sich somit die bei Flachteilen üblicherweise vorhandene L-Umkantung am Außenumfang des Flachteils zu Nutze, um ein Positionierstück in einer exakt vorgegebenen Position in Bezug auf das Flachteil zu positionieren. Im Umkehrschluss wird dadurch die Vorpositionierung des Flachteils am Schaltschrankrahmengestell erheblich erleichtert.

Die L-Umkantung weist in einer Ecke des Flachteils drei jeweils senkrecht zueinander verlaufende Innenseiten auf, an denen das Positionierstück formschlüssig anliegt. Folglich ist das Positionierstück in allen drei Raumrichtungen exakt in Bezug auf das Flachteil vorpositioniert, wodurch die Ausrichtung des Flachteils am Schaltschrankrahmengestell begünstigt wird.

Der Formschlussabschnitt liegt mit allen drei Anlageflächen an jeweils einer der drei senkrecht zueinander verlaufenden Innenseiten der L-Umkantung formschlüssig an.

Der Profilsteg kann sich zu seinem freien Ende hin aufweiten und eine Auflageseite aufweisen, die von seinem freien Ende aus abschüssig ist. Ein derartiger Profilsteg ist aus der DE 10 2015 121192 A1 bekannt. Dabei kann vorgesehen sein, dass das Positionierstück auf die abschüssige Auflageseite aufgesetzt ist.

Das Positionierstück kann einen Haken aufweisen, der den Formschlussabschnitt unter einem Abstand überragt. Der Abstand kann gerade der Materialstärke der L-Umkantung entsprechen. Der Haken kann elastisch ausgeführt sein, beispielsweise aus einem Kunststoff, und in einer relaxierten Position einen Abstand zu dem Formschlussabschnitt aufweisen, der kleiner als eine Materialstärke der L-Umkantung ist, so dass Positionierstück unter einer Vorspannung und gegebenenfalls unter Reibschluss auf die L-Umkantung aufgesetzt werden kann.

Ein Endabschnitt des Hakens kann an einer dem Formschlussabschnitt zugewandten Seite einen Vorsprung aufweisen, der in eine Vertiefung, eine Einprägung, einen Ausschnitt oder einen Durchbruch der L-Umkantung hineinragt und vorzugsweise darin formschlüssig aufgenommen ist. Es kann insbesondere ein rechteckiger Durchbruch vorgesehen sein, der einen Verdrehschutz für das Positionierstück liefert.

Der Haken kann an einer der L-Umkantung abgewandten Seite des Positionierstücks mit seinem Hakenrücken vorstehen und an einem weiteren Flachteil der Anordnung, insbesondere an einer Umkantung eines Dachblechs, anliegen.

Das Positionierstück kann an einer dem Profilsteg zugewandten Seite einen Lagervorsprung aufweisen, der sich vorzugsweise zu seinem freien Ende hin verjüngt und an seinem freien Ende eine Gleitkontur aufweist, über die das Positionierstück auf den Profilsteg aufgesetzt ist.

Eine der Anlageflächen kann über den Lagervorsprung hinweg verlängert sein und eine Stützkante aufweisen, die an einem vertikalen Profilsteg, insbesondere an einem vertikalen Dichtsteg des Schaltschrankrahmengestells anliegt. Diese Stützkante kann dazu dienen, das Flachteil in der Vertikalen zu halten, so dass es ordnungsgemäß um seinen gesamten Umfang an dem Schaltschrankrahmengestell anliegt.

Der Lagervorsprung kann angrenzend an die Gleitkontur eine Anschlagfläche aufweisen, die an einer Profilseite des Schaltschrankrahmengestells anliegt, die über eine Kante an den Profilsteg angeformt ist.

Ein elastisches Dichtelement kann zwischen dem Profilsteg und dem Flachteil angeordnet sein, wie dies beispielsweise aus der DE 10 2015 121192 A1 bekannt ist. Dabei können der Haken mit seinem Hakenrücken an der Umkantung des Dachblechs und/oder der Lagervorsprung mit seiner Anschlagfläche an der Profilseite anliegen, wenn das Dichtelement eine gewünschte Kompression aufweist. Auf diese Weise kann einer Zerstörung des Dichtelements durch Überspannung vorgebeugt und die Einhaltung der IP-Schutzklasse gewährleistet werden.

Der Profilsteg kann eine zur Außenseite des Schaltschrankrahmengestells geöffnete hinterschnittige Aufnahme des Schaltschrankrahmengestells begrenzen, in die das Positionierstück lösbar eingerastet ist.

Die hinterschnittige Aufnahme kann symmetrisch ausgebildet und gegenüberliegend von jeweils einer S-förmigen Kontur an einer der Aufnahme zugewandten Innenseite des Profilstegs und einer der Aufnahme zugewandten Innenseite eines weiteren Profilstegs des Schaltschrankrahmengestells begrenzt sein.

Das Positionierstück kann mit einem Rastfuß in die hinterschnittige Aufnahme eingesetzt und an dem Schaltschrankrahmengestell gehalten sein, wobei der Formschlussabschnitt an den Rastfuß angeformt ist. Weiterhin kann der Formschlussabschnitt an einem seiner Längsenden eine Anlagefläche aufweisen, die den Rastfuß in Längsrichtung des Positionierstücks überragt. Diese Anlagefläche kann sich senkrecht zu der Längsrichtung des Positionierstücks erstrecken und der Formschlussabschnitt zwei weitere Anlageflächen aufweisen, die sich parallel zu der Längsrichtung des Positionierstücks erstrecken, wobei die drei Anlageflächen sich paarweise jeweils senkrecht zueinander erstrecken.

Gemäß einem anderen Aspekt wird ein Verfahren für die Positionierung eines Flachteils an einem Schaltschrankrahmengestell beschrieben, das die Schritte aufweist:
- Bereitstellen eines Schaltschrankrahmengestells, das einen zur Außenseite des Schaltschrankrahmengestells abstehenden, horizontalen Profilsteg aufweist, eines Flachteils, das an seinem Außenumfang zumindest abschnittsweise eine L-Umkantung aufweist, sowie eines Positionierstücks, das einen Formschlussabschnitt mit drei senkrecht zueinander verlaufenden Anlageflächen aufweist;
- Einrasten des Positionierstücks in eine zur Außenseite des Schaltschrankrahmengestells geöffnete hinterschnittige Aufnahme des Schaltschrankrahmengestells, die von dem Profilsteg begrenzt wird;
- Auflegen des Flachteils mit L-Umkantung auf den Formschlussabschnitt, so dass der Formschlussabschnitt mit den drei senkrecht zueinander verlaufenden Anlageflächen an jeweils einer von drei senkrecht zueinander verlaufenden Innenseiten der L-Umkantung formschlüssig anliegt.

Weitere Einzelheiten der Erfindung werden anhand der nachstehenden Figuren erläutert. Dabei zeigt:
- Figur 1: eine Querschnittsansicht einer ersten Ausführungsform einer erfindungsgemäßen Anordnung;
- Figur 2: eine perspektivische Detailansicht der Ausführungsform gemäß Figur 1 mit von dem Flachteil entfernten Positionierstück;
- Figur 3: eine perspektivische Detailansicht der Ausführungsform gemäß Figur 1 mit an dem Flachteil befestigten Positionierstück;
- Figur 4: eine perspektivische Außenansicht der Anordnung gemäß Figur 1;
- Figur 5: eine Querschnittsansicht einer weiteren Ausführungsform einer erfindungsgemäßen Anordnung;
- Figur 6: eine perspektivische Detailansicht der Ausführungsform gemäß Figur 5 mit von dem Schaltschrankrahmengestell entfernten Positionierstück;
- Figur 7: eine perspektivische Detailansicht der Ausführungsform gemäß Figur 5 mit an dem Schaltschrankrahmengestell festgelegten Positionierstück; und
- Figur 8: eine perspektivische Außenansicht der Anordnung gemäß Figur 5.

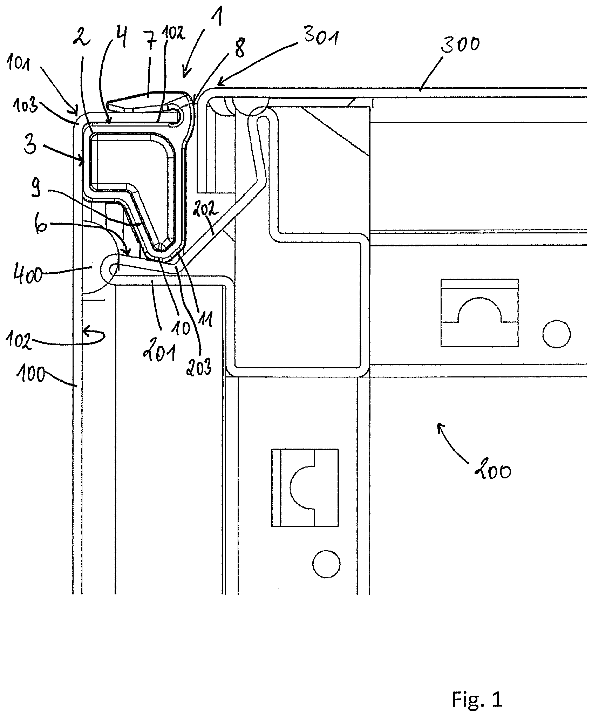

Die Figur 1 zeigt eine erste Ausführungsform einer Anordnung zur Positionierung eines Flachteils 100 an einem Schaltschrankrahmengestell 200. Das Schaltschrankrahmengestell 200 weist einen zur Außenseite des Schaltschrankrahmengestells 300 abstehenden, horizontalen Profilsteg 201 auf, an dem über ein Dichtelement 400 ein Flachteil 100 an dem Schaltschrankrahmengestell 200 festgelegt ist. Das Flachteil 100 weist an seinem Außenumfang umlaufend eine L-Umkantung 101 auf. Die Anordnung weist weiterhin ein Positionierstück 1 auf, das auf den Profilsteg 201 aufgesetzt ist und einen Formschlussabschnitt 2 aufweist, mit dem das Positionierstück 1 an zwei senkrecht zueinander verlaufenden Innenseiten 102 der L-Umkantung 101 formschlüssig anliegt.

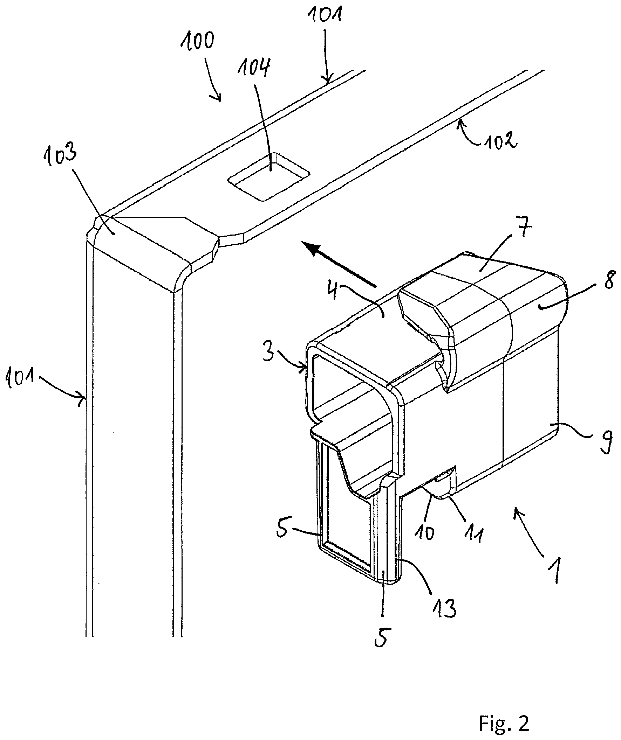

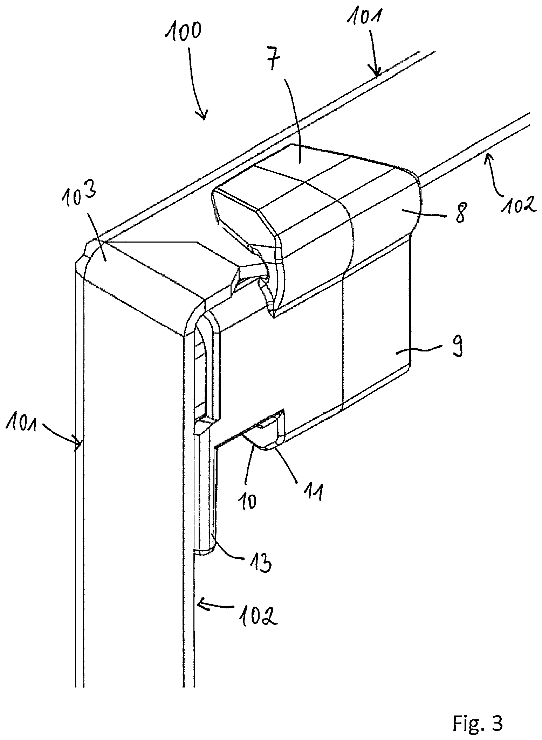

In der Zusammenschau der Figur 1 mit den Figuren 2 und 3 ist zu erkennen, dass das Positionierstück 1 in einem Eckbereich 103 des Flachteils 100 an dem Flachteil 100 festgelegt ist. In der in Figur 3 gezeigten Montageposition ist insbesondere vorgesehen, dass das Positionierstück 1 mit drei senkrecht zueinander verlaufenden Anlageflächen 3, 4, 5 an jeweils einer von drei Innenseiten 102 der L-Umkantung anliegt. Die L-Umkantung weist einen Eckbereich 103 auf, in dem sie um eine Kante des Flachteils 101 kontinuierlich fortgeführt ist.

Die Zusammenschau der Figuren 2 und 3 zeigt den Montagevorgang des Positionierstücks 1 am Flachteil 100. Das Flachteil 1 weist an einem horizontalen Flansch der L-Umkantung 101 einen Durchbruch 104 auf. Das Positionierstück 1 weist einen Haken 7 auf, der die obere horizontale Anlagefläche des Positionierstücks 1 unter einem Abstand überragt und an einer der Anlagefläche 4 zugewandten Seite einen Lagervorsprung 9 aufweist, der beispielsweise als ein mehreckiges Passstück ausgebildet sein kann, welches sich formschlüssig in den Durchbruch 104 einfügt, wenn das Positionierstück 1, wie durch den Pfeil angedeutet, auf einen horizontalen Flansch der L-Umkantung 101 aufgeschoben wird, so dass, wie in Figur 3 gezeigt ist, die obere horizontale Anlagefläche 4 an der Innenseite 102 der horizontalen Umkantung 101 anliegt und der Haken 7 den horizontalen Flansch der L-Umkantung 101 an der der Innenseite 102 gegenüberliegenden Außenseite der L-Umkantung 101 überragt, so dass der Haken 7 mit seinem Lagervorsprung 9 an der der Anlagefläche 4 zugewandten Innenseite des Hakens 7 in den Durchbruch 104 eingreifen kann, so dass das Positionierstück 1 in der in Figur 3 gezeigten Position an dem Flachteil 101 festgelegt ist, wie dies auch im Querschnitt in Figur 1 gezeigt ist.

Da das Positionierstück 1 in der in den Figuren 1 und 3 gezeigten Montageposition mit drei senkrecht zueinanderstehenden Anlageflächen 4, 5, 6 an jeweils einer Innenseite 102 des Flachteils 100 beziehungsweise dessen L-Umkantung 101 anliegt, ist das Positionierstück 1 in seiner Montageposition verdrehsicher an dem Flachteils 100 festgelegt. Die Anlagefläche 5 kann über den Lagervorsprung 9 hinweg verlängert sein und eine Stützkante 13 aufweisen, die an einem vertikalen Profilsteg, insbesondere an einem vertikalen Dichtsteg des Schaltschrankrahmengestells 200 anliegt. Diese Stützkante kann dazu dienen, das Flachteil 100 in der Vertikalen zu halten, so dass es ordnungsgemäß um seinen gesamten Umfang an dem Schaltschrankrahmengestell 200 anliegt.

An seinem dem Haken 7 gegenüberliegenden Ende weist das Positionierstück 1 eine Gleitkontur 10 und daran angrenzend und in diese übergehend eine Anschlagfläche 11 auf. Wie in Figur 1 gezeigt ist, kann das Flachteil 100 samt dem daran befestigten Positionierstück 1 (siehe Figur 3) über die Gleitkontur 10 auf die Auflageseite 6 des Profilstegs 201 des Schaltschrankrahmengestells 200 von der Außenseite des Schaltschrankrahmengestells 200 aufgesetzt werden. Da die Auflageseite 6 in Richtung des Schaltschrankinneren abschüssig ausgebildet ist, wird das Flachteil 100, sobald es mit dem Positionierstück 1 auf den Profilsteg 201, insbesondere auf dessen Auflageseite 6, aufgesetzt ist, aufgrund der Schwerkraft und der durch diese bedingten Hangabtriebskraft entlang der Auflageseite 6 einer Montageposition des Flachteils 100 an dem Schaltschrankrahmengestell 200 angenähert.

Die hangabtriebskraftbedingte Annäherung des Flachteils 100 an das Schaltschrankrahmengestell 200 wird dadurch begrenzt, dass der Profilsteg 201 mit seinem freien Ende auf das Dichtelement 400 an der Innenseite 102 des Flachteils 100 anliegt. In diesem Zustand (nicht dargestellt) ist der Rücken 8 des Hakens 7 von der Umkantung 301 des Dachblechs 300 um einen Abstand (beispielsweise 1 bis 5 mm) beabstandet. Ebenso ist die Anschlagfläche 11 um einen Abstand (beispielsweise 1 bis 5 mm) von der Profilseite 202 des Rahmengestells 200 beabstandet. Die Profilseite 202 geht über eine Kante 203 in den Profilsteg 201 über, insbesondere in die abschüssige Auflageseite 6 des Profilstegs 201.

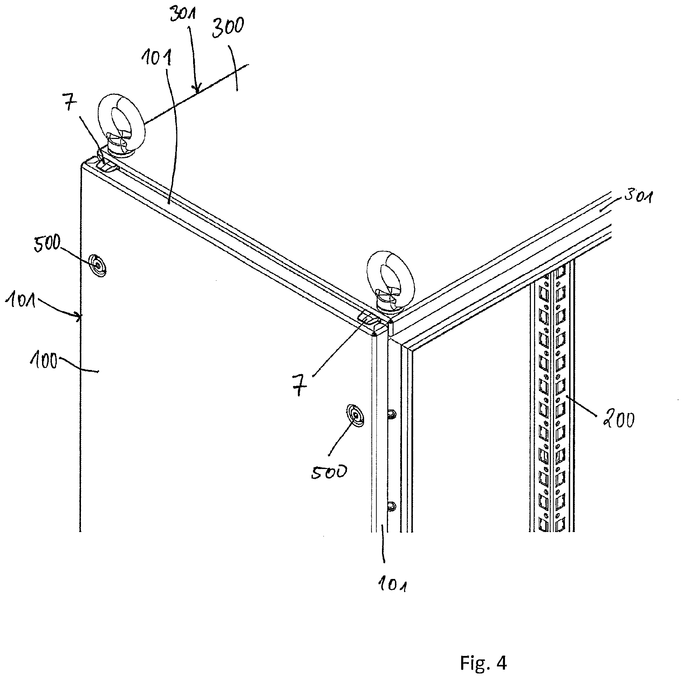

In der beschriebenen Ausgangsposition, in welcher der Profilsteg 201 an dem Dichtelement 400 anliegt, jedoch insbesondere noch keine ausreichende Anpresskraft zwischen dem Dichtsteg 201 und dem Dichtelement 400 wirkt, um das Flachteil 100 gegenüber dem Rahmengestell 200 abzudichten, können Durchgangslöcher für Bolzen 500 (siehe Figur 4) in Bezug auf entsprechende Bolzenaufnahmen in dem Schaltschrankrahmengestell 200 bereits soweit fluchtend zueinander ausgerichtet sein, dass der Bolzen 500 durch das Flachteil 100 in das Schaltschrankrahmengestell 200 eingeschraubt werden kann. Mit dem Anziehen des Bolzens 500 kann dann die erforderliche Anpresskraft zwischen dem Dichtsteg 201 und dem Flachteil 100 hergestellt werden, so dass, wie in Figur 1 gezeigt ist, der Dichtsteg 201 mit seinem freien Ende in das Dichtelement 400 hineingedrückt und damit das Flachteil 100 gegenüber dem Schaltschrankrahmengestell 200 abgedichtet wird. Die Eindringtiefe des Dichtstegs 201 in das Dichtelement 400 ist dadurch begrenzt, dass mit zunehmender Eindringtiefe des Dichtstegs 201 in das Dichtelement 400 der Rücken 8 des Hakens 7 der Umkantung 301 des Dachblechs 300 und die Anschlagfläche 11 der Profilseite 202 angenähert wird, bis der Hakenrücken 8 an der Umkantung 301 und die Anschlagfläche 11 an der Profilseite 202 anliegt und dann ein weiteres Festziehen der Bolzen 5 keine weitere Erhöhung der Eindringtiefe des Dichtstegs 201 in das Dichtelement 400 bewirkt und somit eine Zerstörung des Dichtelements 400, welche wiederum die Dichtwirkung herabsetzen und damit die IP-Schutzklasse der Anordnung gefährden würde, vermieden wird.

Die Figuren 1 und 4 zeigen ebenso, dass das Positionierstück 1 vollständig außerhalb des Dichtbereichs des Rahmengestells 200 angeordnet ist und somit seine Verwendung den Dichtbereich nicht beeinträchtigt. Insbesondere ist es für die Verwendung des erfindungsgemäßen Positionierstücks 1 nicht erforderlich, dass eine Unterbrechung des Dichtbereichs notwendig ist. In dem in Figur 4 gezeigten Montagezustand der Anordnung ragt das Positionierstück lediglich noch mit seinem Haken 7 an einer horizontalen Oberseite der L-Umkantung aus der Anordnung heraus, so dass das äußere Erscheinungsbild des mit Hilfe der erfindungsgemäßen Anordnung geschaffenen Schaltschranks nicht oder nur sehr geringfügig beeinträchtig wird.

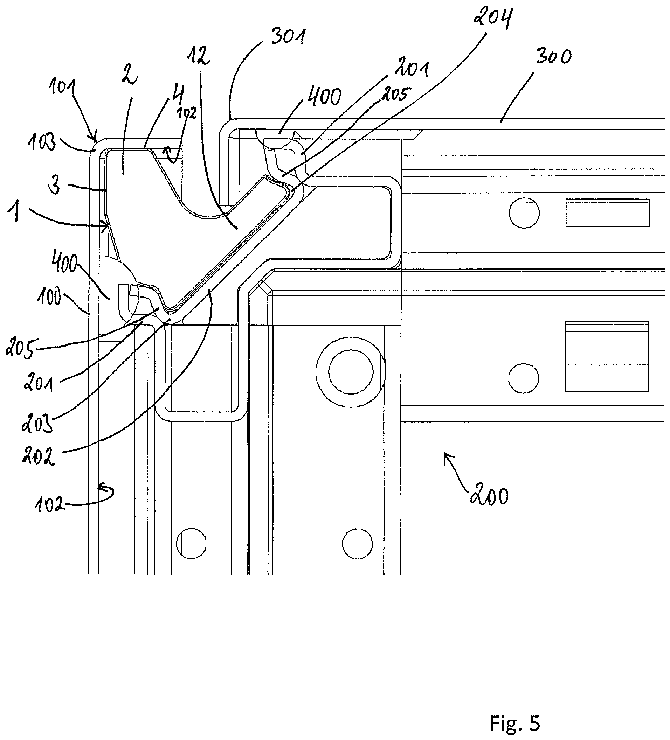

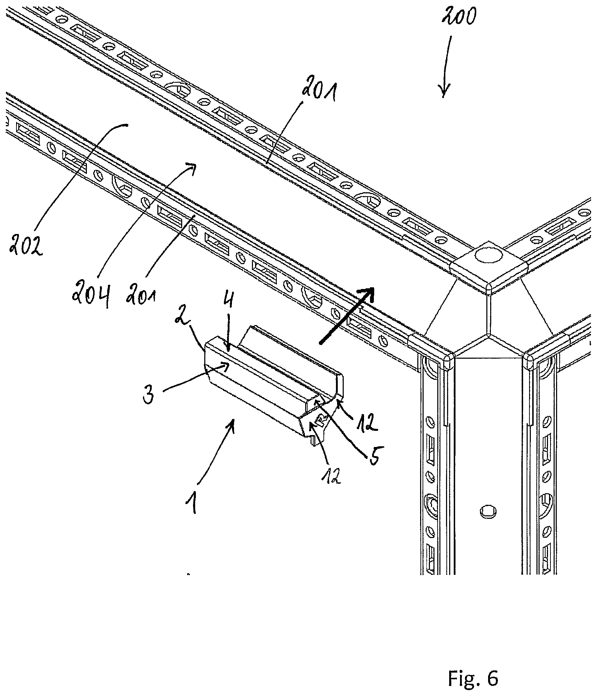

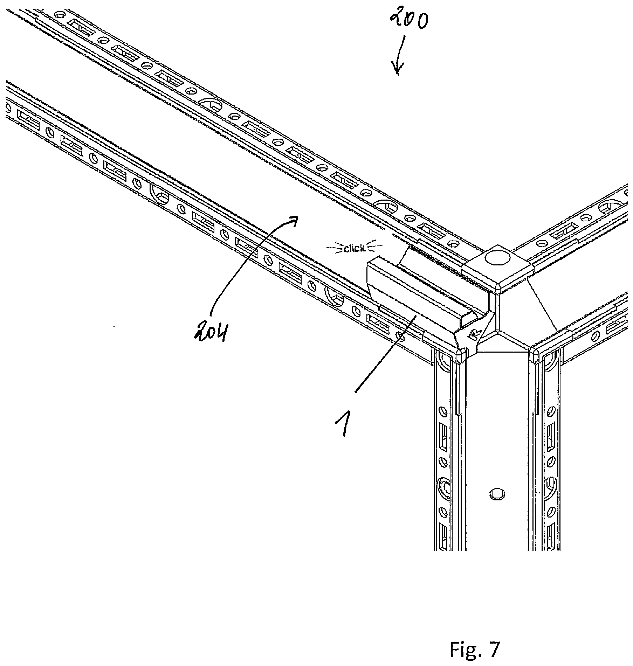

Die Figuren 5 bis 8 zeigen eine weitere Ausführungsform einer erfindungsgemäßen Anordnung zur Positionierung eines Flachteils 100 an einem Schaltschrankrahmengestell 200. Diese Ausführungsform unterscheidet sich insbesondere dadurch, dass im Zuge der Montage an dem Flachteil 100 an dem Rahmengestell 200 das Positionierstück 1 nicht zunächst an dem Flachteil 100 festgelegt wird, um dann das Flachteil 100 mit dem daran befestigten Positionierstück 1 auf das Rahmengestell 200 aufzusetzen. Vielmehr ist vorgesehen, dass das Positionierstück 1 über eine Rastverbindung an dem Rahmengestell 200 vormontiert wird, wobei in einem anschließenden Montageschritt das Flachteil 100 mit seiner L-Umkantung 101 auf den Formschlussabschnitt 2 des Positionierstücks 1 aufgesetzt wird. Der Formschlussabschnitt 2 weist analog zu der Ausführungsform gemäß Figur 1 drei senkrecht zueinander stehende Anlageflächen 4, 5, 6 auf, die dazu eingerichtet sind, insbesondere im Eckbereich einer L-Umkantung 101 des Flachteils 100 mit drei ebenso senkrecht zueinander stehenden Innenseiten 102 formschlüssig zur Anlage zu kommen. Insoweit wird auf die Beschreibung der Ausführungsform gemäß den Figuren 1 bis 4 verwiesen.

Weiterhin abweichend von der in den Figuren 1 bis 4 gezeigten Ausführungsform weist die in den Figuren 5 bis 8 gezeigte Ausführungsform einen Rastfuß 12 auf, der in eine hinterschnittige Aufnahme 204 des Rahmengestells 200 eingerastet ist. Dazu weist der Profilsteg 201 eine zur Außenseite des Schaltschrankrahmengestells 200 geöffnete, hinterschnittige Aufnahme 204 auf, in die das Positionierstück 1 lösbar eingerastet werden kann. Die hinterschnittige Aufnahme 204 ist symmetrisch ausgebildet und weist an gegenüberliegenden Innenseiten jeweils eine S-förmige Kontur 205 auf, die einander zugewandt sind. Der Rastfuß 12 kann dazu beispielsweise aus einem elastischen Kunststoff ausgebildet sein.

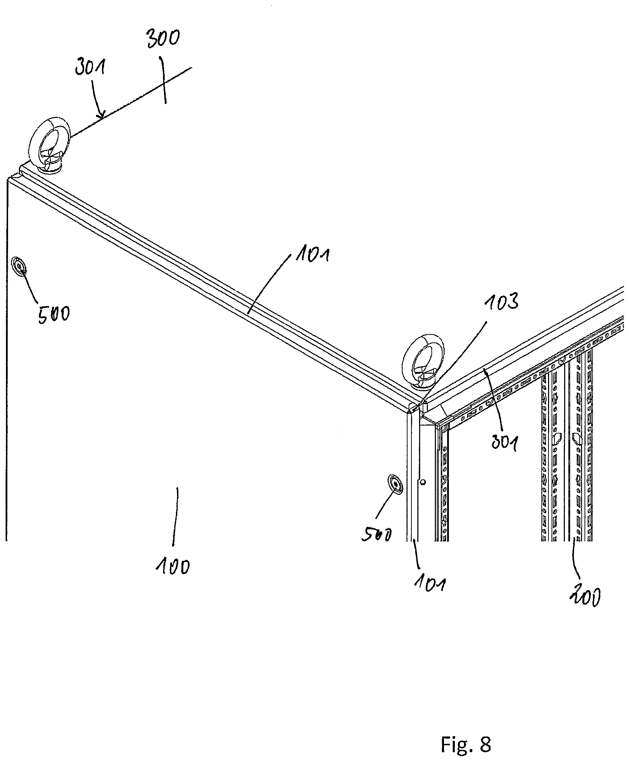

Nachdem das Flachteil 100 mit seiner oberen horizontalen Innenseite 102 auf die Anlagefläche 4 des Formschlussabschnitts 2 aufgesetzt worden ist, kann das Flachteil 100 in Horizontalrichtung weiter dem Rahmengestell angenähert werden, bis das Flachteil 100 mit seinem an der Innenseite 102 ausgebildeten Dichtelement 400 an dem Dichtsteg 201 zur Anlage kommt. In dieser Position sind analog zu der in den Figuren 1 bis 4 beschriebenen Ausführungsform wiederum Befestigungsaufnahmen von Flachteil 100 und Rahmengestell 200 zur Flucht gebracht, so dass ein Bolzen 500 (siehe Figur 8) durch das Flachteil 100 in das Schaltschrankrahmengestell 200 eingeschraubt werden kann. Die weitere Annäherung des Flachteils 100 an das Schaltschrankrahmengestell 200 im Zuge des Einschraubens des Bolzens 500 ist dadurch begrenzt, dass die vertikale Innenseite 201 des Flachteils 100 an der Anlagefläche 3 des Positionierstücks 1 zur Anlage kommt, so dass wiederum eine definierte Endmontageposition des Flachteils 100 an dem Schaltschrankrahmengestell 200 unter Aufrechterhaltung der Dichtwirkung des Dichtelements 400 und Realisierung einer gewünschten IP-Schutzklasse gewährleistet ist.

### Bezugszeichenliste:

- 1: Positionierstück
- 2: Formschlussabschnitt
- 3: erste Anlagefläche
- 4: zweite Anlagefläche
- 5: dritte Anlagefläche
- 6: Auflageseite
- 7: Haken
- 8: Hakenrücken
- 9: Lagervorsprung
- 10: Gleitkontur
- 11: Anschlagfläche
- 12: Rastfuß
- 13: Stützkante
- 100: Flachteil
- 101: L-Umkantung
- 102: Innenseite
- 103: Ecke
- 104: Durchbruch
- 200: Schaltschrankrahmengestell
- 201: Profilsteg
- 202: Profilseite
- 203: Kante
- 204: Aufnahme
- 205: Kontur
- 300: Dachblech
- 301: Umkantung
- 400: Dichtelement
- 500: Bolzen

## Patentansprüche

1. Anordnung zur Positionierung eines Flachteils (100) an einem Schaltschrankrahmengestell (200), mit einem Schaltschrankrahmengestell (200), das einen zur Außenseite des Schaltschrankrahmengestells (200) abstehenden, horizontalen Profilsteg (201) aufweist, und mit einem Flachteil (100), das an seinem Außenumfang zumindest abschnittsweise eine L-Umkantung (101) aufweist, sowie mit einem Positionierstück (1), das auf den Profilsteg (201) aufgesetzt ist, **dadurch gekennzeichnet, dass** das Positionierstück (1) einen Formschlussabschnitt (2) mit drei senkrecht zueinander verlaufenden Anlageflächen (3, 4, 5) aufweist, mit denen der Formschlussabschnitt (2) in einer Ecke des Flachteils (100) an jeweils einer von drei senkrecht zueinander verlaufenden Innenseiten (102) der L-Umkantung (101) formschlüssig anliegt.

2. Anordnung nach einem der vorangegangenen Ansprüche, bei der sich der Profilsteg (201) zu seinem freien Ende hin aufweitet und eine Auflageseite (6) aufweist, die von seinem freien Ende aus abschüssig ist, wobei das Positionierstück (1) auf die abschüssige Auflageseite (6) aufgesetzt ist.

3. Anordnung nach einem der vorangegangenen Ansprüche, bei der das Positionierstück (1) einen Haken (7) aufweist, der den Formschlussabschnitt (2) unter einem Abstand überragt.

4. Anordnung nach Anspruch 3, bei der ein Endabschnitt des Hakens (7) an einer dem Formschlussabschnitt (2) zugewandten Seite einen Vorsprung aufweist, der in eine Vertiefung, eine Einprägung, einen Ausschnitt oder einen Durchbruch (104) der L-Umkantung (101) hineinragt und vorzugsweise darin formschlüssig aufgenommen ist.

5. Anordnung nach Anspruch 3 oder 54, bei der der Haken (7) an einer der L-Umkantung (101) abgewandten Seite des Positionierstücks (1) mit seinem Hakenrücken (8) vorsteht und an einem weiteren Flachteil (100) der Anordnung, insbesondere an einer Umkantung (301) eines Dachblechs (300), anliegt.

6. Anordnung nach einem der vorangegangenen Ansprüche, bei der das Positionierstück (1) an einer dem Profilsteg (201) zugewandten Seite einen Lagervorsprung (9) aufweist, der sich zu seinem freien Ende hin verjüngt und an seinem freien Ende eine Gleitkontur (10) aufweist, über die das Positionierstück (1) auf den Profilsteg (201) aufgesetzt ist.

7. Anordnung nach Anspruch 6, bei der der Lagervorsprung (9) angrenzend an die Gleitkontur (10) eine Anschlagfläche (11) aufweist, die an einer Profilseite (202) des Schaltschrankrahmengestell (200) anliegt, die über eine Kante (203) an den Profilsteg (201) angeformt ist.

8. Anordnung nach mindestens einem der Ansprüche 5 und 7, bei der ein elastisches Dichtelement (400) zwischen dem Profilsteg (201) und dem Flachteil (100) angeordnet ist, wobei der Haken (7) mit seinem Hakenrücken (8) an der Umkantung (301) des Dachblechs (300) und/oder der Lagervorsprung (9) mit seiner Anschlagfläche (11) an der Profilseite (202) anliegt, wenn das Dichtelement (400) eine gewünschte Kompression aufweist.

9. Anordnung nach Anspruch 1, bei der der Profilsteg (201) eine zur Außenseite des Schaltschrankrahmengestells (200) geöffnete hinterschnittige Aufnahme (204) des Schaltschrankrahmengestells (200) begrenzt, in die das Positionierstück (1) lösbar eingerastet ist.

10. Anordnung nach Anspruch 9, bei der die hinterschnittige Aufnahme (204) symmetrisch ausgebildet und gegenüberliegend von jeweils einer S-förmigen Kontur (205) an einer der Aufnahme (204) zugewandten Innenseite des Profilstegs (201) und einer der Aufnahme (204) zugewandten Innenseite eines weiteren Profilstegs (201) des Schaltschrankrahmengestells (200) begrenzt ist.

11. Anordnung nach Anspruch 9 oder 10, bei der das Positionierstück (1) mit einem Rastfuß (12) in die hinterschnittige Aufnahme (204) eingesetzt und an dem Schaltschrankrahmengestell (200) gehalten ist, wobei der Formschlussabschnitt (2) an den Rastfuß (12) angeformt ist und an einem seiner Längsenden eine Anlagefläche (5) aufweist, die den Rastfuß (12) in Längsrichtung des Positionierstücks (1) überragt.

12. Anordnung nach Anspruch 11, bei der sich die Anlagefläche (5) senkrecht zu der Längsrichtung des Positionierstücks (1) erstreckt und der Formschlussabschnitt (2) zwei weitere Anlageflächen (3, 4) aufweist, die sich parallel zu der Längsrichtung des Positionierstücks (1) erstrecken, wobei die drei Anlageflächen (3, 4, 5) sich paarweise jeweils senkrecht zueinander erstrecken.

13. Verfahren für die Positionierung eines Flachteils (100) an einem Schaltschrankrahmengestell, das die Schritte aufweist:
- Bereitstellen eines Schaltschrankrahmengestells (200), das einen zur Außenseite des Schaltschrankrahmengestells (200) abstehenden, horizontalen Profilsteg (201) aufweist, eines Flachteils (100), das an seinem Außenumfang zumindest abschnittsweise eine L-Umkantung (101) aufweist, sowie eines Positionierstück (1), das einen Formschlussabschnitt (2) mit drei senkrecht zueinander verlaufenden Anlageflächen (3, 4, 5) aufweist;
- Einrasten des Positionierstücks (1) in einer zur Außenseite des Schaltschrankrahmengestells (200) geöffnete hinterschnittige Aufnahme (204) des Schaltschrankrahmengestells (200), die von dem Profilsteg (201) begrenzt wird;
- Auflegen des Flachteils (100) mit der L-Umkantung (101) auf den Formschlussabschnitt (2), so dass der Formschlussabschnitt (2) mit den drei senkrecht zueinander verlaufenden Anlageflächen (3, 4, 5) an jeweils einer von drei senkrecht zueinander verlaufenden Innenseiten (102) der L-Umkantung (101) formschlüssig anliegt.

## Claims

1. An arrangement for positioning a flat part (100) on a switchgear cabinet frame (200), having a switchgear cabinet frame (200) which has a horizontal profiled web (201) projecting towards the outside of the switchgear cabinet frame (200), and having a flat part (100) which has an L-shaped bend (101) at least in sections on its outer circumference, and having a positioning piece (1) which is placed on the profiled web (201), **characterized in that** the positioning piece (1) has a positive-locking section (2) with three abutment surfaces (3, 4, 5) which run perpendicular to one another and with which the positive-locking section (2) bears in a form-fitting manner in a corner of the flat part (100) against in each case one of three inner sides (102) of the L-shaped bend (101), the inner sides (102) running perpendicular to one another.

2. The arrangement according to any one of the preceding claims, in which the profiled web (201) widens towards its free end and has a support side (6) which is sloping from its free end, the positioning piece (1) being placed on the sloping support side (6).

3. The arrangement according to any one of the preceding claims, wherein the positioning piece (1) comprises a hook (7) projecting beyond the positive-locking section (2) at a distance.

4. The arrangement according to claim 3, wherein an end portion of the hook (7) has, on a side facing the positive-locking section (2), a projection which projects into a recess, an indentation, a cutout or an opening (104) of the L-shaped bend (101) and is preferably received therein in a form-fitting manner.

5. The arrangement according to claim 3 or 4, in which the hook (7) projects with its hook back (8) on a side of the positioning piece (1) facing away from the L bend (101) and bears against a further flat part (100) of the arrangement, in particular against a bend (301) of a roof sheet (300).

6. The arrangement according to any one of the preceding claims, in which the positioning piece (1) has, on a side facing the profiled web (201), a bearing projection (9) which tapers towards its free end and has, at its free end, a sliding contour (10) via which the positioning piece (1) is placed on the profiled web (201).

7. The arrangement according to claim 6, in which the bearing projection (9) has, adjacent to the sliding contour (10), a stop surface (11) which bears against a profile side (202) of the switch cabinet frame (200), which is integrally formed on the profile web (201) via an edge (203).

8. The arrangement according to at least one of claims 5 and 7, in which an elastic sealing element (400) is arranged between the profiled web (201) and the flat part (100), the hook (7) bearing with its hook back (8) against the bend (301) of the roof sheet (300) and/or the bearing projection (9) bearing with its stop face (11) against the profiled side (202) when the sealing element (400) has a desired compression.

9. The arrangement according to claim 1, wherein the profiled web (201) delimits an undercut receptacle (204) of the switch cabinet frame (200) which is open towards the outside of the switch cabinet frame (200) and into which the positioning piece (1) is detachably engaged.

10. The arrangement according to claim 9, wherein the undercut receptacle (204) is symmetrically formed and oppositely bounded by a respective S-shaped contour (205) on an inner side of the profiled web (201) facing the receptacle (204) and an inner side of a further profiled web (201) of the switch cabinet frame (200) facing the receptacle (204).

11. The arrangement according to claim 9 or 10, in which the positioning piece (1) is inserted with a latching foot (12) into the undercut receptacle (204) and is held on the switch cabinet frame (200), the positive-locking section (2) being integrally formed on the latching foot (12) and having at one of its longitudinal ends an abutment surface (5) which projects beyond the latching foot (12) in the longitudinal direction of the positioning piece (1).

12. The arrangement according to claim 11, wherein the abutment surface (5) extends perpendicularly to the longitudinal direction of the positioning piece (1) and the positive-locking section (2) has two further abutment surfaces (3, 4) extending parallel to the longitudinal direction of the positioning piece (1), the three abutment surfaces (3, 4, 5) extending perpendicularly to each other in pairs.

13. A method of positioning a flat member (100) on a control cabinet frame, comprising the steps of:
- Providing a switch cabinet frame (200) which has a horizontal profiled web (201) projecting towards the outside of the switch cabinet frame (200), a flat part (100) which has an L-shaped bend (101) at least in sections on its outer circumference, and a positioning piece (1) which has a positive-locking section (2) with three abutment surfaces (3, 4, 5) running perpendicular to one another;
- Latching the positioning piece (1) in an undercut receptacle (204) of the switchgear cabinet frame (200) which is open towards the outside of the switchgear cabinet frame (200) and is delimited by the profiled web (201);
- Placing the flat part (100) with the L-shaped bend (101) on the positive-locking section (2), so that the positive-locking section (2) bears with the three abutment surfaces (3, 4, 5), which extend perpendicularly to one another, against in each case one of three inner sides (102), which extend perpendicularly to one another, of the L-shaped bend (101) in a form-fitting manner.

## Revendications

1. Ensemble destiné à positionner une pièce plate (100) sur un châssis d'armoire de commande (200), avec un châssis d'armoire de commande (200) qui comporte une barrette profilée (201) horizontale dépassant vers le côté extérieur du châssis d'armoire de commande (200), et avec une pièce plate (100) qui comporte sur sa circonférence extérieure au moins par tronçons un rebord en L (101), ainsi qu'avec une pièce de positionnement (1) qui est posée sur la barrette profilée (201) , **caractérisé en ce que** la pièce de positionnement (1) comporte un tronçon à complémentarité de forme (2) avec trois surfaces d'appui (3, 4, 5) perpendiculaires les unes aux autres avec lesquelles le tronçon à complémentarité de forme (2) est, dans un coin de la pièce plate (100), adjacent par complémentarité de forme à respectivement un de trois côtés intérieurs (102) perpendiculaires les uns aux autres du rebord en L (101).

2. Ensemble selon l'une des revendications précédentes, dans lequel la barrette profilée (201) s'évase vers son extrémité libre et comporte un côté d'appui (6) qui est en pente à partir de son extrémité libre, la pièce de positionnement (1) étant posée sur le côté d'appui (6) en pente.

3. Ensemble selon l'une des revendications précédentes, dans lequel la pièce de positionnement (1) comporte un crochet (7) qui surplombe d'une certaine distance le tronçon à complémentarité de forme (2).

4. Ensemble selon la revendication 3, dans lequel un tronçon d'extrémité du crochet (7) comporte, à une extrémité tournée vers le tronçon à complémentarité de forme (2), une saillie qui dépasse à l'intérieur d'un creux, d'une empreinte, d'une découpe ou d'une traversée (104) du rebord en L (101) et qui y est préférence logée par complémentarité de forme.

5. Ensemble selon la revendication 3 ou 4, dans lequel le crochet (7), sur un côté de la pièce de positionnement (1) éloigné du rebord en L (101), dépasse avec son dos de crochet (8) et est adjacent à une autre pièce plate (100) de l'ensemble, en particulier à un rebord (301) d'une tôle de toit (300).

6. Ensemble selon l'une des revendications précédentes, dans lequel la pièce de positionnement (1), sur un côté tourné vers la barrette profilée (201), comporte une saillie d'appui (9) qui se rétrécit vers son extrémité libre et qui comporte à son extrémité libre un contour de glissement (10) par le biais duquel la pièce de positionnement (1) est posée sur la barrette profilée (201).

7. Ensemble selon la revendication 6, dans lequel la saillie d'appui (9) comporte, de façon limitrophe au contour de glissement (10), une surface de butée (11) qui est adjacente à un côté profilé (202) du châssis d'armoire de commande (200) qui est formé sur la barrette profilée (201) par le biais d'une arête (203).

8. Ensemble selon au moins l'une des revendications 5 et 7 dans lequel un élément d'étanchéité (400) élastique est disposé entre la barrette profilée (201) et la pièce plate (100), le crochet (7) étant, avec son dos de crochet (8), adjacent au rebord (301) de la tôle de toit (300), et/ou la saillie d'appui (9) étant, avec sa surface de butée (11), adjacente au côté profilé (202) quand l'élément d'étanchéité (400) présente une compression souhaitée.

9. Ensemble selon la revendication 1, dans lequel la barrette profilée (201) limite un logement (204) en contre-dépouille du châssis d'armoire de commande (200) qui est ouvert vers le côté extérieur du châssis d'armoire de commande (200), et dans lequel logement la pièce de positionnement (1) est encliquetée de façon détachable.

10. Ensemble selon la revendication 9, dans lequel le logement (204) en contre-dépouille est constitué de façon symétrique et est limité en face par respectivement un contour (205) en forme de S sur un côté intérieur, tourné vers le logement (204), de la barrette profilée (201) et, sur un côté intérieur, tourné vers le logement (204), d'une autre barrette profilée (201) du châssis d'armoire de commande (200).

11. Ensemble selon la revendication 9 ou 10, dans lequel la pièce de positionnement (1) est insérée avec un pied encliquetable (12) dans le logement (204) en contre-dépouille et est retenue sur le châssis d'armoire de commande (200), le tronçon à complémentarité de forme (2) étant formé sur le pied encliquetable (12) et présentant, à l'une de ses extrémités longitudinales, une surface d'appui (5) qui surplombe le pied encliquetable (12) dans la direction longitudinale de la pièce de positionnement (1).

12. Ensemble selon la revendication 11, dans lequel la surface d'appui (5) s'étend perpendiculairement à la direction longitudinale de la pièce de positionnement (1), et le tronçon à complémentarité de forme (2) comporte deux autres surfaces d'appui (3, 4) qui s'étendent parallèlement à la direction longitudinale de la pièce de positionnement (1), les surfaces d'appui (3, 4, 5) s'étendant respectivement perpendiculairement par paires les unes aux autres.

13. Procédé de positionnement d'une pièce plate (100) sur un châssis d'armoire de commande, qui comprend les étapes suivantes :
- fourniture d'un châssis d'armoire de commande (200) qui comporte une barrette profilée (201) horizontale qui dépasse vers le côté extérieur du châssis d'armoire de commande (200), d'une pièce plate (100) qui comporte sur sa circonférence extérieure au moins par tronçons un rebord en L (101), ainsi que d'une pièce de positionnement (1) qui comporte un tronçon à complémentarité de forme (2) avec trois surfaces d'appui (3, 4, 5) perpendiculaires les unes aux autres ;
- encliquetage de la pièce de positionnement (1) dans un logement (204) en contre-dépouille du châssis d'armoire de commande (200) qui est ouvert vers le côté extérieur du châssis d'armoire de commande (200) et qui est limité par la barrette profilée (201) ;
- pose de la pièce plate (100) avec le rebord en L (101) sur le tronçon à complémentarité de forme (2) de telle sorte que le tronçon à complémentarité de forme (2) avec les trois surfaces d'appui (3, 4, 5) perpendiculaires les unes aux autres est adjacent par complémentarité de forme à respectivement un de trois côtés intérieurs (102) du rebord en L (101) perpendiculaires les uns aux autres.
